# EUROPEAN PATENT APPLICATION

(11) **EP 4 130 797 A1**
(43) Date of publication of application: **08.02.2023**
(21) Application number: 21781752.7
(22) Date of filing: 01.04.2021
(51) Int. Cl.: G01S 17/42

(54) **ELECTROMAGNETIC WAVE DETECTION DEVICE AND RANGING DEVICE**

(30) Priority: 03.04.2020 JP 2020067743
(71) Applicant: Kyocera Corporation, Kyoto-shi Kyoto 612-8501 (JP)
(72) Inventor: OKADA Hiroki, Kyoto-shi, Kyoto 612-8501 (JP); INUKAI Tsuneyasu, Kyoto-shi, Kyoto 612-8501 (JP)
(74) Representative: Viering, Jentschura & Partner mbB Patent- und Rechtsanwälte
(86) International application number: PCT/JP2021/014171
(87) International publication number: WO 2021/201231

(57) **Abstract**

An electromagnetic wave detection apparatus and a range finder that achieve compatibility between detection of a distant object and a wide angle of view are provided. An electromagnetic wave detection apparatus (10) includes an irradiator (12) configured to emit a first electromagnetic wave; a deflector (13) configured to output the first electromagnetic wave in a plurality of different directions, the first electromagnetic wave being emitted by the irradiator; a plurality of input units (15) on which a second electromagnetic wave is incident, the second electromagnetic wave containing a reflected wave from an object that reflects the first electromagnetic wave outputted from the deflector; and a first detector (20) configured to detect the reflected wave incident on the plurality of input units, and the reflected wave is incident on at least one of the plurality of input units.

## Description

### CROSS-REFERENCE TO RELATED APPLICATIONS

This application claims priority from Japanese Patent Application No. 2020-067743 (filed April 3, 2020), the content of which is all incorporated herein by reference.

### TECHNICAL FIELD

The present disclosure relates to an electromagnetic wave detection apparatus and a range finder.

### BACKGROUND OF INVENTION

In recent years, apparatuses have been developed to acquire information with regard to the surroundings from the results of detection by multiple detectors that detect an electromagnetic wave. For example, a known electromagnetic wave detection apparatus reduces the difference between coordinate systems in the results of detection by detectors (refer to Patent Literature 1).

### CITATION LIST

### PATENT LITERATURE

Patent Literature 1: Japanese Unexamined Patent Application Publication No. 2018-200927

### SUMMARY

According to a first aspect, an electromagnetic wave detection apparatus includes an irradiator, a deflector, a plurality of input units, and a first detector.

The irradiator is configured to emit a first electromagnetic wave.

The deflector is configured to output the first electromagnetic wave in a plurality of different directions, the first electromagnetic wave being emitted by the irradiator.

An object reflects the first electromagnetic wave outputted from the deflector, and a second electromagnetic wave containing a reflected wave from the object is incident on the plurality of input units.

The first detector is configured to detect the reflected wave incident on the plurality of input units.

The reflected wave is incident on at least one of the plurality of input units.

According to a second aspect, an electromagnetic wave detection apparatus includes an irradiation system and a plurality of optical receiver systems.

The irradiation system is configured to output a first electromagnetic wave in a plurality of different directions into a space in which an object is present.

The object reflects the first electromagnetic wave, and a second electromagnetic wave from the space, which contains a reflected wave from the object, is incident on the plurality of optical receiver systems.

Each of the plurality of optical receiver systems includes a first detector disposed to detect a portion of the incident second electromagnetic wave, the portion at least containing the reflected wave.

Detection signals of the reflected wave are totaled, the reflected wave being incident on the plurality of optical receiver systems, the detection signals being received from the first detectors.

According to a third aspect, an electromagnetic wave detection apparatus includes an irradiator, a plurality of input units, and a first detector.

The irradiator is configured to simultaneously emit a first electromagnetic wave in a plurality of different directions.

An object reflects the first electromagnetic wave outputted from the irradiator, and a second electromagnetic wave containing a reflected wave from the object is incident on the plurality of input units.

The first detector is configured to detect the reflected wave incident on the plurality of input units.

The reflected wave is incident on at least one of the plurality of input units.

According to a fourth aspect, a range finder includes an irradiator, a deflector, a plurality of input units, a first detector, and a calculator.

The irradiator is configured to emit a first electromagnetic wave.

The deflector is configured to output the first electromagnetic wave in a plurality of different directions, the first electromagnetic wave being emitted by the irradiator.

An object reflects the first electromagnetic wave outputted from the deflector, and a second electromagnetic wave containing a reflected wave from the object is incident on the plurality of input units.

The first detector is configured to detect the reflected wave incident on the plurality of input units.

The calculator is configured to calculate a distance to the object based on detection information from the first detector.

The reflected wave is incident on at least one of the plurality of input units.

### BRIEF DESCRIPTION OF THE DRAWINGS

FIG. 1 is a configuration diagram schematically illustrating an electromagnetic wave detection apparatus according to an embodiment.
FIG. 2 is an illustration for describing propagation directions of an electromagnetic wave in a first state and a second state of the electromagnetic wave detection apparatus in FIG. 1.
FIG. 3 illustrates an appearance of the electromagnetic wave detection apparatus in FIG. 1.
FIG. 4 illustrates how reflected waves enter the electromagnetic wave detection apparatus in FIG. 1.
FIG. 5 is a configuration diagram schematically illustrating a variation of the electromagnetic wave detection apparatus.
FIG. 6 illustrates an appearance of a variation of the electromagnetic wave detection apparatus.
FIG. 7 is a configuration diagram schematically illustrating a range finder including the electromagnetic wave detection apparatus.
FIG. 8 is a timing chart for describing a distance calculation by the range finder.

### DESCRIPTION OF EMBODIMENTS

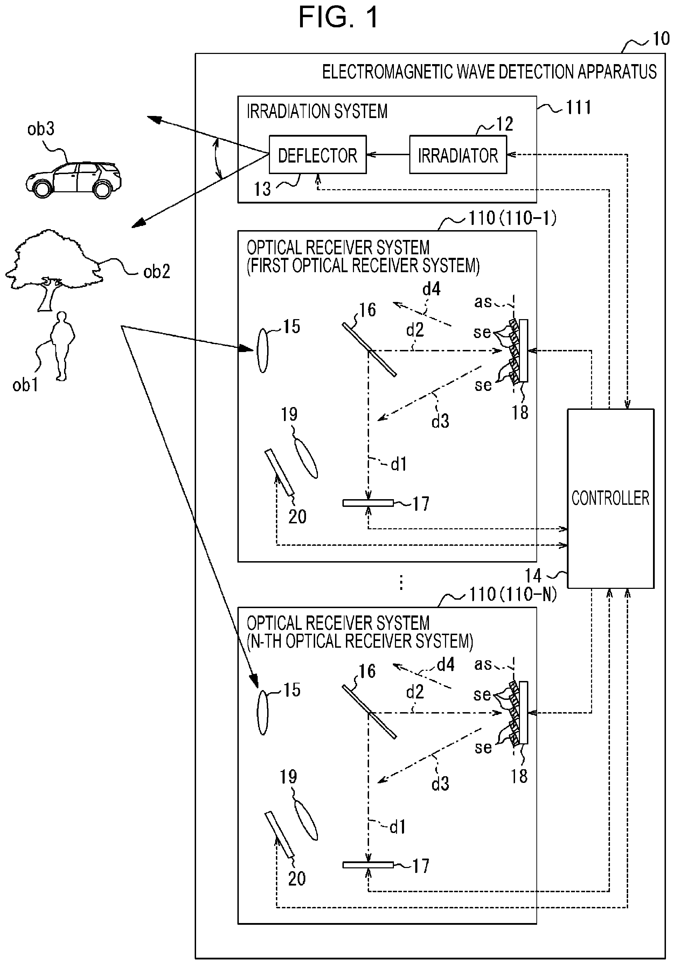

FIG. 1 is a configuration diagram schematically illustrating an electromagnetic wave detection apparatus 10 according to an embodiment. The electromagnetic wave detection apparatus 10 includes an irradiation system 111, multiple optical receiver systems 110, and a controller 14. In the present embodiment, the electromagnetic wave detection apparatus 10 includes N optical receiver systems 110 denoted by a first optical receiver system 110-1 to an N-th optical receiver system 110-N, where N is an integer equal to 2 or more. The term "optical receiver systems/system 110" is used to represent all or any one of the first optical receiver system 110-1 to the N-th optical receiver system 110-N when a specific optical receiver system is not distinguished from others. In the present embodiment, the first optical receiver system 110-1 to the N-th optical receiver system 110-N have the same configuration. Note that, in the present embodiment, description will be given on the assumption that the electromagnetic wave detection apparatus 10 includes a single irradiation system 111 and multiple optical receiver systems 110. The number of irradiation systems 111 is not limited to one, and multiple optical receiver systems 110 may be associated with each of the multiple irradiation systems 111.

The irradiation system 111 includes an irradiator 12 and a deflector 13. The optical receiver system 110 includes an input unit 15, a separator 16, a first detector 20, a second detector 17, a switch 18, and a first post-stage optical system 19. Each functional block of the electromagnetic wave detection apparatus 10 will be described below in detail in the present embodiment.

A dashed line connecting functional blocks represents a flow of a control signal or a flow of information through communication in the figures. Communication represented by a dashed line may be wireline communication or wireless communication. A solid arrow represents a beam of an electromagnetic wave. An object ob1, an object ob2, and an object ob3 are each a target subject for the electromagnetic wave detection apparatus 10 in the figures. The object ob1, the object ob2, and the object ob3 are located at different places.

### (Irradiation System)

The irradiator 12 is configured to emit at least one selected from the group consisting of infrared light, visible light, ultraviolet light, and radio wave. In the present embodiment, the irradiator 12 is configured to emit infrared light. The irradiator 12 is configured to emit an outgoing electromagnetic wave toward the object ob1, the object ob2, and the object ob3 directly or indirectly via the deflector 13. In the present embodiment, the irradiator 12 is configured to emit the outgoing electromagnetic wave indirectly via the deflector 13 toward a space in which the object ob1, the object ob2, and the object ob3, which are target objects, are present. In the following description, the electromagnetic wave emitted from the irradiator 12 may be referred to as a first electromagnetic wave, which is distinguished from an electromagnetic wave incident on the optical receiver systems 110.

In the present embodiment, the irradiator 12 is configured to emit an electromagnetic wave in a narrow, such as 0.5°, beam. The irradiator 12 is also capable of emitting a pulsed electromagnetic wave. The irradiator 12 may include, for example, a light emitting diode (LED) as an electromagnetic wave emitting element. Further, the irradiator 12 may include, for example, a laser diode (LD) as an electromagnetic wave emitting element. The irradiator 12 is configured to start or stop emitting the electromagnetic wave in accordance with the control by the controller 14. Note that the irradiator 12 may also include an LED array or an LD array including multiple electromagnetic wave emitting elements disposed in an array and emit multiple beams simultaneously.

The deflector 13 is configured to output the electromagnetic wave emitted from the irradiator 12 in multiple different directions and change an irradiation position of the electromagnetic wave emitted into the space in which the object ob1, the object ob2, and the object ob3 are present. In other words, the deflector 13 is configured to scan the space in which the object ob1, the object ob2, and the object ob3 are present by using the electromagnetic wave emitted from the irradiator 12. The deflector 13 may reflect the electromagnetic wave from the irradiator 12 back in varying directions to output the electromagnetic wave in multiple different directions. The deflector 13 is configured to scan the object ob1, the object ob2, and the object ob3 in one dimension or in two dimensions. In the present embodiment, the deflector 13 is configured to execute a two-dimensional scan. If the irradiator 12 includes, for example, an LD array, the deflector 13 reflects all the multiple beams outputted from the LD array and outputs all the beams in one direction. Namely, the irradiation system 111 includes one deflector for the irradiator 12 including one or more electromagnetic wave emitting elements. In the present specification, the first electromagnetic wave outputted from one deflector may be referred to as "the first electromagnetic wave in one beam". For example, when the irradiator 12 simultaneously emits multiple first electromagnetic waves and the multiple first electromagnetic waves are deflected by the deflector 13 and outputted, all the electromagnetic waves outputted from the deflector 13 are referred to as "the first electromagnetic wave in one beam".

The deflector 13 is configured in such a manner that a range in which an electromagnetic wave is detectable by at least one of the multiple optical receiver systems 110 includes at least a portion of an irradiation region, the irradiation region being a space into which the electromagnetic wave emitted from the irradiator 12 is outputted after reflection. Accordingly, at least a portion of the electromagnetic wave emitted via the deflector 13 into the space in which the object ob1, the object ob2, and the object ob3 are present is reflected by at least a portion of the object ob1, the object ob2, and the object ob3 and can be detected by at least one of the optical receiver systems 110. The first electromagnetic wave outputted from the deflector 13 is reflected by at least a portion of the object ob1, the object ob2, and the object ob3, and an electromagnetic wave reflected back from the portion may be referred to as a reflected wave. Note that the reflected wave may simultaneously be incident on multiple optical receiver systems 110.

Examples of the deflector 13 include a micro-electromechanical-systems (MEMS) mirror, a polygon mirror, and a galvanometer mirror. In the present embodiment, the deflector 13 includes a MEMS mirror.

The deflector 13 is configured to change the direction in which the electromagnetic wave is reflected based on the control by the controller 14. The deflector 13 may include an angle sensor such as an encoder, and the angle detected by the angle sensor may be reported to the controller 14 as information with regard to the direction in which the electromagnetic wave is reflected. The controller 14 is able to calculate an irradiation position of the electromagnetic wave based on the directional information acquired from the deflector 13 in such a configuration. The controller 14 is also able to calculate an irradiation position based on a drive signal inputted into the deflector 13 to change the direction in which the electromagnetic wave is reflected.

### (Optical Receiver System)

Since the first optical receiver system 110-1 to the N-th optical receiver system 110-N have the same configuration as described above, description will be given with regard to an optical receiver system 110, which is any one of the optical receiver systems 110. If a reflected wave from at least a portion of the object ob1, the object ob2, and the object ob3 is incident on the optical receiver system 110, the portion may be referred to as an object ob. An electromagnetic wave that includes the reflected wave from the object ob and that is incident on the optical receiver system 110 may be referred to as a second electromagnetic wave, which is distinguished from the first electromagnetic wave. The second electromagnetic wave, which is incident on the input unit 15, includes not only the reflected wave, which is the electromagnetic wave outputted from the deflector 13 being reflected back from the object ob, but also external light such as sunlight and external light reflected back from an object.

The input unit 15 is an optical system including at least one optical component and is configured to form an image of the object ob, which is a target subject. Examples of the optical component include a lens, a mirror, an iris, and an optical filter. The input unit 15 includes at least a lens in the present embodiment.

The separator 16 is disposed between the input unit 15 and a primary position of image formation. The primary position of image formation is where an image of the object ob located at a predetermined distance from the input unit 15 is formed by the input unit 15. The separator 16 is configured to separate an incident electromagnetic wave into an electromagnetic wave that propagates in a first direction d1 and an electromagnetic wave that propagates in a second direction d2 in accordance with wavelength.

In the present embodiment, the separator 16 is configured to reflect a portion of the incident electromagnetic wave back in the first direction d1 and transmit another portion of the electromagnetic wave in the second direction d2. In the present embodiment, the separator 16 is configured to reflect an electromagnetic wave back in the first direction d1, the electromagnetic wave including visible light and environment light such as sunlight reflected back from an object. The separator 16 is configured to transmit in the second direction d2 infrared light emitted from the irradiator 12 or an electromagnetic wave including a wavelength of an electromagnetic wave that is the infrared light reflected back from an object. In another example, the separator 16 may be configured to transmit a portion of the incident electromagnetic wave in the first direction d1 and reflect another portion of the electromagnetic wave back in the second direction d2. The separator 16 may also be configured to refract a portion of the incident electromagnetic wave in the first direction d1 and refract another portion of the electromagnetic wave in the second direction d2. Examples of the separator 16 include a half mirror, a beam splitter, a dichroic mirror, a cold mirror, a hot mirror, a metasurface, a deflection element, and a prism.

The second detector 17 is disposed on a path of an electromagnetic wave propagating in the first direction d1 from the separator 16. The second detector 17 is disposed at the position of image formation of the object ob in the first direction d1 or in the vicinity of the position of image formation. The second detector 17 is configured to detect an electromagnetic wave propagating in the first direction d1 from the separator 16.

The second detector 17 may be disposed with respect to the separator 16 in such a manner that a first propagation axis of an electromagnetic wave propagating in the first direction d1 from the separator 16 is parallel to a first detection axis of the second detector 17. The first propagation axis is the central axis of an electromagnetic wave that fans out radially and that propagates in the first direction d1 from the separator 16. The first propagation axis is obtained in the present embodiment by extending the optical axis of the input unit 15 to the separator 16 and changing the direction at the separator 16 so that the axis becomes parallel to the first direction d1. The first detection axis runs through the center of the detection surface of the second detector 17 and is perpendicular to the detection surface.

The second detector 17 may be disposed in such a manner that the interval between the first propagation axis and the first detection axis is equal to a first threshold interval or less. The second detector 17 may also be disposed in such a manner that the first propagation axis and the first detection axis coincide. The second detector 17 is disposed in such a manner that the first propagation axis and the first detection axis coincide in the present embodiment.

The second detector 17 may be disposed with respect to the separator 16 in such a manner that a first angle between the first propagation axis and the detection surface of the second detector 17 is equal to a first threshold angle or less or equal to a predetermined angle. The second detector 17 is disposed in such a manner that the first angle is equal to 90° in the present embodiment.

The second detector 17 is a passive sensor in the present embodiment. More specifically, the second detector 17 includes a device array in the present embodiment. For example, the second detector 17 includes an image-capturing element such as an image sensor or an imaging array and is configured to capture an image formed by an electromagnetic wave focused on the detection surface and generate image information corresponding to the object ob whose image is captured.

More specifically, the second detector 17 is configured to capture an image in visible light in the present embodiment. The second detector 17 is configured to transmit a signal containing generated image information to the controller 14. The second detector 17 may be configured to capture an image other than an image in visible light, such as an image in infrared light, ultraviolet light, and radio wave.

The switch 18 is disposed on a path of an electromagnetic wave propagating in the second direction d2 from the separator 16. The switch 18 is disposed at a primary position of image formation of the object ob in the second direction d2 or in the vicinity of the primary position of image formation.

The switch 18 is disposed at the position of image formation in the present embodiment. The switch 18 has an action surface as on which an electromagnetic wave is incident after passing through the input unit 15 and the separator 16. The action surface as is formed by multiple switching elements se arranged in two dimensions. The action surface as is where an electromagnetic wave is subjected to an action, such as reflection or transmission, in at least one of a first or second state described below.

The switch 18 enables each switching element se to switch between a first state and a second state, the first state being a state in which an electromagnetic wave incident on the action surface as is caused to propagate in a third direction d3, the second state being a state in which an electromagnetic wave incident on the action surface as is caused to propagate in a fourth direction d4. The first state is a first reflection state in which an electromagnetic wave incident on the action surface as is reflected back in the third direction d3 in the present embodiment. The second state is a second reflection state in which an electromagnetic wave incident on the action surface as is reflected back in the fourth direction d4.

In the present embodiment, more specifically, the switch 18 includes a reflection surface of each switching element se, and the reflection surface is configured to reflect an electromagnetic wave. The switch 18 is configured to change the orientation of the reflection surface of each switching element se freely and cause each switching element se to switch between the first reflection state and the second reflection state.

Examples of the switch 18 include a digital micromirror device (DMD) in the present embodiment. A DMD is configured to drive minute reflection surfaces that form the action surface as and enable the reflection surface of each switching element se to switch between inclination states of +12° and -12° with respect to the action surface as. The action surface as is parallel to a plate surface of a board on which the minute reflection surfaces are mounted in the DMD.

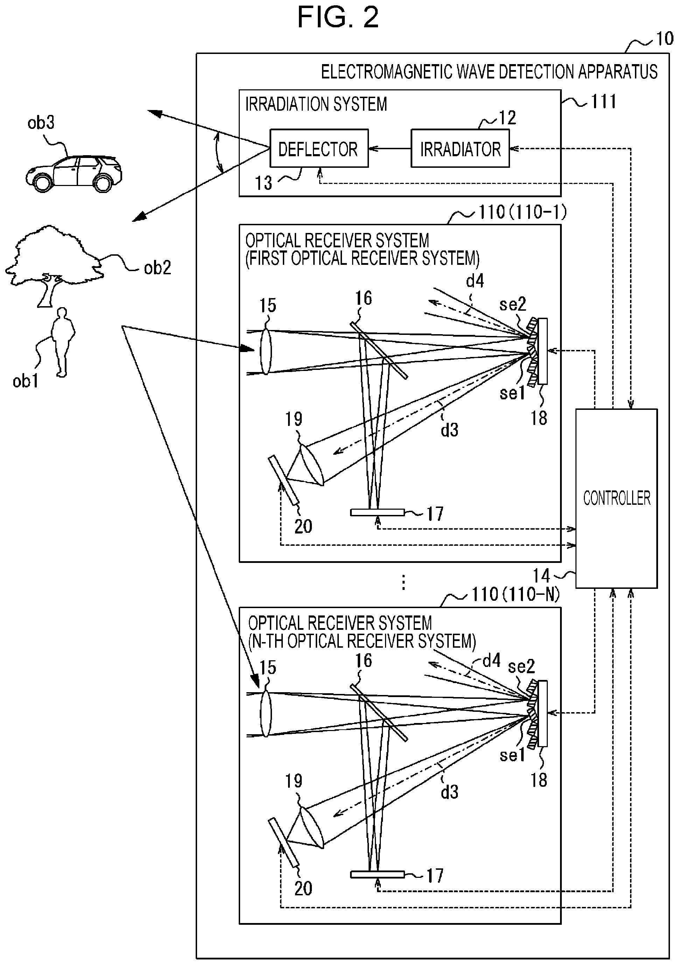

The switch 18 is configured to cause each switching element se to switch between the first state and the second state based on the control by the controller 14 described below. For example, as illustrated in FIG. 2, the switch 18 is configured to simultaneously cause a group of switching elements se1 to switch to the first state to enable an electromagnetic wave incident on the group of switching elements se1 to propagate in the third direction d3 and cause another group of switching elements se2 to switch to the second state to enable an electromagnetic wave incident on the other group of switching elements se2 to propagate in the fourth direction d4. More specifically, the controller 14 is configured to detect a direction in which the electromagnetic wave is emitted or a position irradiated with the electromagnetic wave based on directional information from the deflector 13. Then, causing the group of switching elements se1, which correspond to the detected direction in which the electromagnetic wave is emitted or the detected position irradiated with the electromagnetic wave, to switch to the first state and causing the other group of switching elements se1 to switch to the second state selectively enable the reflected wave from the object ob to propagate in the third direction d3. Since a portion other than the reflected wave from the object ob in the electromagnetic wave passing through the separator 16 propagates in the fourth direction d4, the portion of the electromagnetic wave is not incident on the first detector 20.

As illustrated in FIG. 1, the first post-stage optical system 19 is disposed in the third direction d3 from the switch 18. The first post-stage optical system 19 includes, for example, at least one of a lens or a mirror. The first post-stage optical system 19 is configured to receive an electromagnetic wave whose propagation direction is switched by the switch 18 and form an image of the object ob.

The first detector 20 is configured to detect the reflected wave. The first detector 20 is disposed at a position where the first detector 20 can detect an electromagnetic wave that propagates through the first post-stage optical system 19 after being switched by the switch 18 to propagate in the third direction d3. The first detector 20 is configured to detect the electromagnetic wave that propagates through the first post-stage optical system 19, that is, the electromagnetic wave that propagates in the third direction d3 and output a detection signal.

The first detector 20 and the switch 18 may be disposed with respect to the separator 16 in such a manner that a second propagation axis of an electromagnetic wave is parallel to a second detection axis of the first detector 20, the electromagnetic wave being switched by the switch 18 to propagate in the third direction d3 after propagating in the second direction d2 from the separator 16. The second propagation axis is the central axis of an electromagnetic wave that fans out radially and that propagates in the third direction d3 from the switch 18. The second propagation axis is obtained in the present embodiment by extending the optical axis of the input unit 15 to the switch 18 and changing the direction at the switch 18 so that the axis becomes parallel to the third direction d3. The second detection axis runs through the center of the detection surface of the first detector 20 and is perpendicular to the detection surface.

The first detector 20 and the switch 18 may be disposed in such a manner that the interval between the second propagation axis and the second detection axis is equal to a second threshold interval or less. The second threshold interval may be equal to or different from the first threshold interval. The first detector 20 may be disposed in such a manner that the second propagation axis and the second detection axis coincide. The first detector 20 is disposed in such a manner that the second propagation axis and the second detection axis coincide in the present embodiment.

The first detector 20 and the switch 18 may be disposed with respect to the separator 16 in such a manner that a second angle between the second propagation axis and the detection surface of the first detector 20 is equal to a second threshold angle or less or equal to a predetermined angle. The second threshold angle may be equal to or different from the first threshold angle. The first detector 20 is disposed in such a manner that the second angle is equal to 90° as described above in the present embodiment.

In the present embodiment, the first detector 20 is an active sensor to detect the reflected wave, which is an electromagnetic wave emitted from the irradiator 12 to the object ob and reflected back from the object ob. In the present embodiment, the first detector 20 is configured to detect the reflected wave, which is an electromagnetic wave that is reflected back from the object ob after being emitted from the irradiator 12 and being reflected and aimed at the object ob by the deflector 13. As described below, an electromagnetic wave emitted from the irradiator 12 is at least one selected from the group consisting of infrared light, visible light, ultraviolet light, and radio wave.

Examples of the first detector 20 include a single device such as an avalanche photodiode (APD), a photodiode (PD), and a ranging image sensor. Examples of the first detector 20 may also include a device array such as an APD array, a PD array, a ranging imaging array, and a ranging image sensor.

In the present embodiment, the first detector 20 is configured to transmit to the controller 14 a signal containing detection information indicative of detection of a reflected wave from a target subject. More specifically, the first detector 20 is configured to detect an electromagnetic wave in an infrared band. Note that signals collected from the first detectors 20 included in the multiple optical receiver systems 110 may be totaled and transmitted to the controller 14 by using a totaling means other than the controller 14. Alternatively, the controller 14 may be configured to collect and total signals from the first detectors 20.

The first detector 20 is used as a detection element to measure the distance to the object ob in the present embodiment. In other words, the first detector 20 is an element to form a ranging sensor and only needs to detect an electromagnetic wave, and an image need not be formed at the detection surface. Accordingly, the first detector 20 need not be disposed at a secondary position of image formation where an image is formed by the first post-stage optical system 19. That is, as long as an electromagnetic wave from the entire angle of view can be incident on the detection surface in this configuration, the first detector 20 may be disposed at any position on the path of the electromagnetic wave that propagates through the first post-stage optical system 19 after being switched by the switch 18 to propagate in the third direction d3.

The controller 14 is configured to control the irradiation system 111 and the multiple optical receiver systems 110. The controller 14 includes one or more processors and a memory. The one or more processors may include at least one of a general-purpose processor or a dedicated processor. The general-purpose processor is configured to load a specific program and execute a specific function, and the dedicated processor is configured to perform specific processing. Examples of the dedicated processor may include an application-specific integrated circuit (ASIC). Examples of the one or more processors may include a programmable logic device (PLD). Examples of a PLD may include a field-programmable gate array (FPGA). The controller 14 may include at least one of a system-on-a-chip (SoC) or a system in a package (SiP), in which one or more processors cooperate.

The controller 14 can acquire information with regard to the surroundings of the electromagnetic wave detection apparatus 10 based on the electromagnetic wave individually detected by the first detector 20 and the second detector 17. Examples of the information with regard to the surroundings include image information and detection information. For example, the controller 14 is configured to acquire image information produced based on the electromagnetic wave detected as an image by the second detector 17.

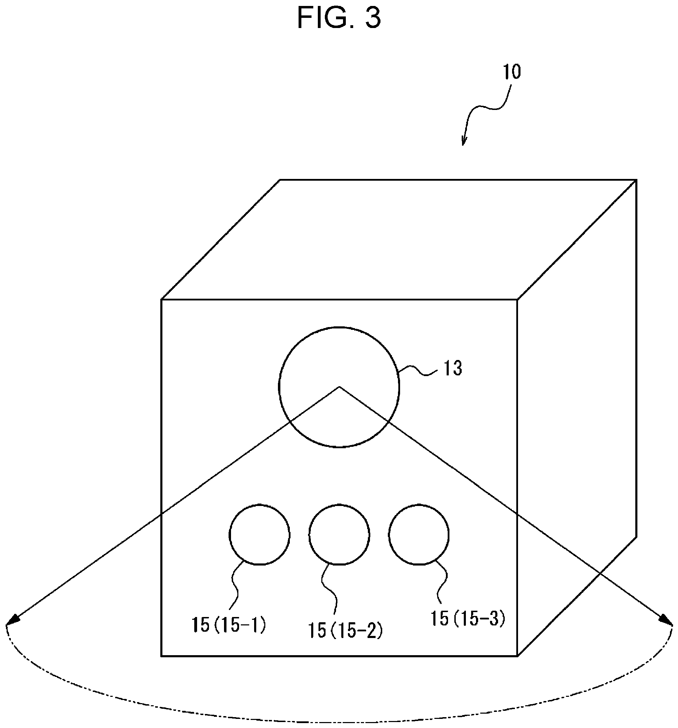

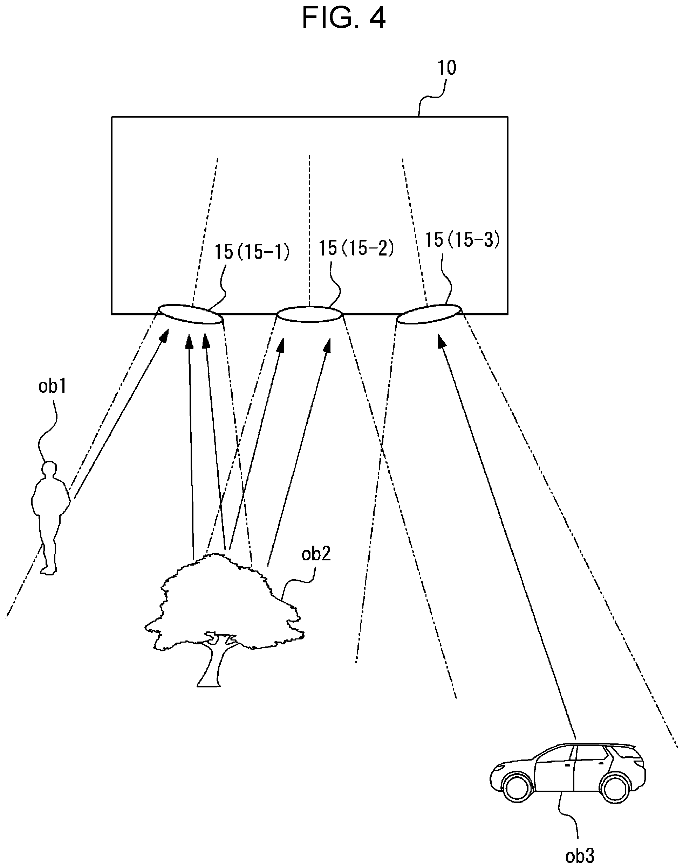

FIG. 3 illustrates an appearance of the electromagnetic wave detection apparatus 10 with N equal to 3, that is, the electromagnetic wave detection apparatus 10 including three optical receiver systems 110. The deflector 13 is configured to scan a space where the object ob1, the object ob2, and the object ob3 are present by deflecting and outputting the first electromagnetic wave into the space from an output port for the electromagnetic wave. In the example in FIG. 3, the scanning direction of the first electromagnetic wave (that is, the direction in which the output direction of the first electromagnetic wave is changed) is horizontal. A portion of the input unit 15 of each of the three optical receiver systems 110 is exposed. In the example in FIG. 3, a first input unit 15-1, a second input unit 15-2, and a third input unit 15-3 are arranged parallel to the scanning direction, that is, in the horizontal direction. The first input unit 15-1, the second input unit 15-2, and the third input unit 15-3 may each have a fixed angle of view, and angles of view of adj acent input units may overlap. For example, as illustrated in FIG. 4, the angles of view of the first input unit 15-1 and the second input unit 15-2 overlap at the boundary, and the angles of view of the second input unit 15-2 and the third input unit 15-3 overlap at the boundary. The deflector 13 is formed by, for example, a MEMS mirror and is configured to output the first electromagnetic wave emitted in pulses from the irradiator 12 by horizontally changing the deflection direction. The multiple input units 15 are arranged in the same direction. The surface on which the output port for outputting the first electromagnetic wave and the input units 15 of the three optical receiver systems 110 are exposed in the electromagnetic wave detection apparatus 10 may be referred to as the front surface of the electromagnetic wave detection apparatus 10.

A known electromagnetic wave detection apparatus 10 includes only one optical receiver system 110, and a wide-angle receiver lens is used as the input unit 15 to obtain information with regard to the surroundings in a wide angle of view. However, using a receiver lens having a wide angle of view reduces receiving sensitivity for an object ob located distantly. In particular, since the intensity of light passing through a wide-angle lens is lower on the periphery of the lens than on the principal axis of the lens, compatibility between a wide angle of view and detection of a distant object is hard to achieve.

In the present embodiment, a single wide-angle lens is not used in the electromagnetic wave detection apparatus 10, and the input units 15 each having a lens with a narrow angle of view in the multiple optical receiver systems 110 are arranged, enabling information with regard to the surroundings to be acquired in a wide angle of view as a whole. For example, as illustrated in FIG. 4, when the object ob1, the object ob2, and the object ob3 are located in a wide angle of view on the front side of the electromagnetic wave detection apparatus 10, a reflected wave from each object is incident on at least one of the input units the first input unit 15-1, the second input unit 15-2, and the third input unit 15-3. In this case, the first input unit 15-1, the second input unit 15-2, and the third input unit 15-3 each only need to receive a reflected wave included in a fixed angle of view and need not have a wide-angle lens. Thus, the electromagnetic wave detection apparatus 10 can achieve compatibility between a wide angle of view and detection of a distant object in the present embodiment.

For example, as illustrated in FIG. 4, the object ob2 includes a portion located in both the angle of view of the first input unit 15-1 and the angle of view of the second input unit 15-2, and a reflected wave from the portion is incident on both the first input unit 15-1 and the second input unit 15-2. In this case, each of the first detectors 20 in the two optical receiver systems 110 detects a reflected wave from the object ob2. Then, the controller 14 obtains from the two optical receiver systems 110 detection information indicative of detection of a reflected wave from the object ob2 and can acquire information with regard to the object ob2, which is located distantly, with high sensitivity. For example, the object ob2 includes a portion located in both the angle of view of the first input unit 15-1 and the angle of view of the second input unit 15-2, and a reflected wave from the portion is detected simultaneously (or nearly simultaneously) by the first detectors 20 in the two optical receiver systems 110. Totaling optical receive signals from the first detectors 20 in the two optical receiver systems 110 enables acquisition of a large optical receive signal even from a reflected wave passing through a periphery of a lens where the intensity of light is likely to be low, and information with regard to the object ob2, which is located distantly, can be acquired with high sensitivity.

In contrast, the object ob3 is located in the angle of view of the third input unit 15-3, and a reflected wave from the object ob3 is incident on the third input unit 15-3. The object ob3 is located near the center of the angle of view of the third input unit 15-3. Thus, the optical receiver system 110 can acquire an optical receive signal of the object ob3, which is located distantly, with high sensitivity, and the controller 14 can acquire information with regard to the object ob3. Although the object ob1 is located at a position where an object is detectable only by using a wide-angle lens in the related-art technology, the electromagnetic wave detection apparatus 10 can acquire information with regard to the object ob 1 since a reflected wave from the object ob1 is incident on the first input unit 15-1.

The controller 14 is configured to retain a direction in which an electromagnetic wave is emitted or a position irradiated with an electromagnetic wave in the space based on directional information from the deflector 13 in the irradiation system 111. Thus, the controller 14 is configured to determine whether the reflected wave is incident on the first input unit 15-1, the second input unit 15-2, or the third input unit 15-3. Of the switching elements se of the switch 18 in the optical receiver system 110 on which the reflected wave is incident, the controller 14 causes the switching elements se on which the reflected wave is incident to switch to the first state and causes the other switching elements se1 to switch to the second state, leading to high-sensitivity detection of the reflected wave from the object ob.

When the reflected wave is received from the object ob, such as the object ob2, which is located in the angles of view of multiple input units, the controller 14 can control each of the switches 18 of the multiple optical receiver systems 110 including all the input units (the first input unit 15-1 and the second input unit 15-2) on which the reflected wave is incident, and the controller 14 can acquire an optical receive signal from each of the first detectors 20. In other words, a region in an overlying portion of overlapping fields of view of multiple input units is located in a range in which the reflected wave is detectable by the first detectors 20. That is, the region in the overlying portion of overlapping fields of view is located in a range detectable by all the first detectors 20 that detect the reflected wave from the object ob in the region. Note that the controller 14 is configured to cause multiple optical receiver systems 110 to detect the object ob2 in the present embodiment but may be configured to cause only one optical receiver system 110 to detect the object ob2. In such a case, the controller 14 may cause the switching elements se of only the switch 18 in the optical receiver system 110 likely to acquire the reflected wave with higher intensity (for example, the optical receiver system 110 including the input unit having the center of the angle of view closer to the irradiation position of the electromagnetic wave) to switch to the first state, for example, based on directional information from the deflector 13.

The multiple input units 15 may include lenses directed in the same direction or directed in different directions in the electromagnetic wave detection apparatus 10. The optical axes of the three input units 15 differ from each other in the example in FIG. 4. The second input unit 15-2 at the center is directed straight ahead on the front surface. The first input unit 15-1 and the third input unit 15-3 are individually directed away from the input unit 15-2 and directed toward outside. This arrangement enables the electromagnetic wave detection apparatus 10 to acquire information with regard to the surroundings in a wider angle of view in the example in FIG. 4. Lenses included in adjacent input units 15 are desirably inclined in different directions in the multiple input units 15 in the electromagnetic wave detection apparatus 10 in this way. In particular, the optical axes of these lenses desirably cross on the incident direction side of the front surface of the electromagnetic wave detection apparatus 10 in the propagation direction of the second electromagnetic wave. Angles of view of lenses included in adjacent input units 15 need not overlap. In the case of no overlapping, the electromagnetic wave detection apparatus 10 can acquire information with regard to the surroundings in a still wider angle of view. However, if adj acent input units 15 have overlapping fields of view as described above, the overlying portion of the overlapping fields of view corresponds to peripheries of lenses included in the adjacent input units 15, leading to an increase in detection sensitivity. Thus, adjacent lenses desirably have overlapping angles of view for the use requiring detection sensitivity.

Lenses included in the multiple input units 15 may all have the same extent of the field of view, or some lenses may have the extent of the field of view that differs from the extent of the field of view of other lenses in the electromagnetic wave detection apparatus 10. For example, a lens having a narrow angle of view may be selected for the second input unit 15-2 at the center for detection of a distant object. Then, a lens having a wider angle of view than the lens of the second input unit 15-2 may be selected for the first input unit 15-1 and the third input unit 15-3 to obtain a wide angle of view. In short, lenses of the multiple input units 15 may have different angles of view in accordance with the position of the input unit 15. In this case, compatibility between a wide angle of view and detection of a distant object is achievable even if lenses are directed in the same direction. Detection in a still wider angle of view is achievable by changing the orientations of the lenses of the multiple input units 15 in addition to the above arrangement.

The number of the multiple input units 15 may be equal to two or equal to four or more in the electromagnetic wave detection apparatus 10. For example, compatibility between a wide angle of view and detection of a distant object is also achievable by the electromagnetic wave detection apparatus 10 including two input units 15. The electromagnetic wave detection apparatus 10 including two input units 15 desirably includes two lenses having angles of view wide enough to overlap fields of view. Since a reflected wave is incident on both the input units 15 from an object ob located in an overlying portion of the overlapping fields of view, the controller 14 can synthesize detection information as described above. Thus, sensitivity of detection of a distant object can be increased in the overlying portion of the overlapping fields of view of the two lenses.

As described above, the electromagnetic wave detection apparatus 10 is configured in the present embodiment in such a manner that the first electromagnetic wave in one beam outputted from the deflector 13 is reflected by the object ob and the reflected wave is incident on at least one of the multiple input units 15. This configuration enables the electromagnetic wave detection apparatus 10 to achieve compatibility between detection of a distant object and a wide angle of view.

When the first electromagnetic wave in one beam outputted from the deflector 13 is reflected by the object ob and the reflected wave is incident on two or more of the multiple input units 15 in the electromagnetic wave detection apparatus 10 according to the present embodiment, the first detectors 20 all detect the reflected wave. The controller 14 synthesizes detection information and can thereby acquire information with regard to a distant object with high sensitivity.

### (Variations)

The present disclosure has been described with reference to the drawings and based on the example. Note that those skilled in the art easily perform various variations and corrections based on the present disclosure. Thus, it is to be appreciated that those variations and corrections are within the scope of the present disclosure.

The switch 18 can change the propagation direction of an electromagnetic wave incident on the action surface as to two directions in the above embodiment, but the switch 18 need not change the propagation direction to either of the two directions and may be able to change the propagation direction to three or more directions.

In the switch 18 according to the above embodiment, the first state and the second state are the first reflection state and the second reflection state, respectively. An electromagnetic wave incident on the action surface as is reflected back in the third direction d3 and the fourth direction d4 in the first reflection state and the second reflection state, respectively. However, other modes may be adopted.

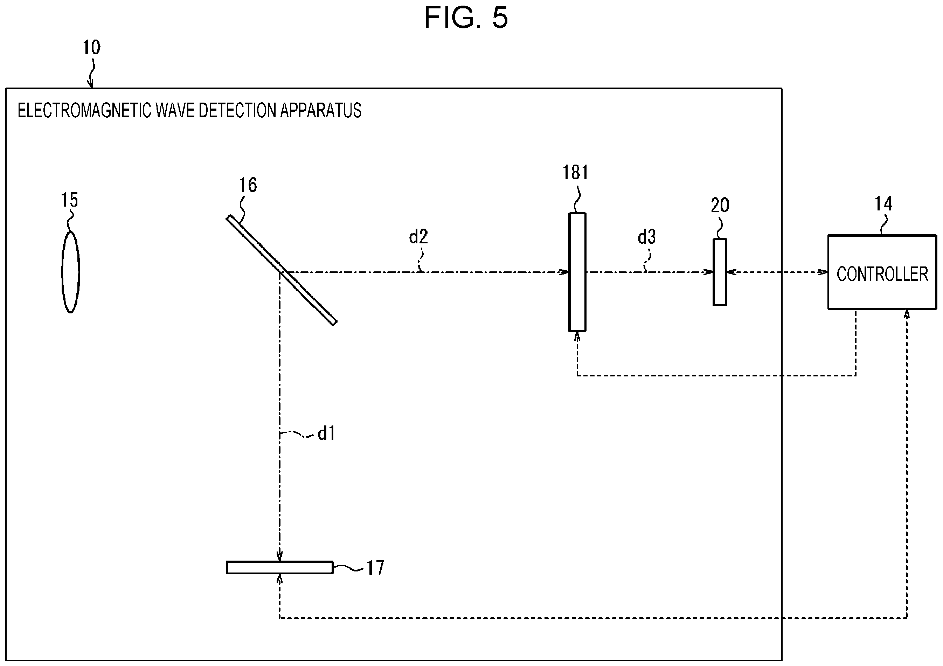

For example, as illustrated in FIG. 5, the first state may be a transmission state in which an electromagnetic wave incident on the action surface as is transmitted and directed in the third direction d3. More specifically, a switch 181 may include a shutter for each switching element, and the shutter may have a reflection surface for reflecting an electromagnetic wave back in the fourth direction d4. Closing and opening the shutter of each switching element enable the switching element to switch between the first state, which is a transmission state, and the second state, which is a reflection state, in the switch 181 having this configuration.

Examples of the switch 181 having this configuration include a switch including a MEMS shutter in which multiple shutters capable of opening and closing are arranged in an array. Examples of the switch 181 also include a switch including liquid crystal shutters capable of switching between a reflection state in which an electromagnetic wave is reflected and a transmission state in which an electromagnetic wave is transmitted in accordance with orientation of liquid crystals. Changing the orientation of liquid crystals of each switching element enables the switching element to switch between the first state, which is a transmission state, and the second state, which is a reflection state, in the switch 181 having this configuration.

The optical receiver system 110 may further include a second post-stage optical system and a third detector in the electromagnetic wave detection apparatus 10. The second post-stage optical system is disposed in the fourth direction d4 from the switch 18 and is configured to form an image of the object ob. The third detector is disposed on the path of an electromagnetic wave that propagates through the second post-stage optical system after being switched by the switch 18 to propagate in the fourth direction d4, and the third detector is configured to detect the electromagnetic wave that propagates in the fourth direction d4.

The electromagnetic wave detection apparatus 10 is configured to enable the first detector 20 to function as a scanning-type active sensor in cooperation with the deflector 13 by causing the deflector 13 to sweep a beam of an electromagnetic wave emitted from the irradiator 12 in the above embodiment. However, the electromagnetic wave detection apparatus 10 need not be configured in this way. For example, the electromagnetic wave detection apparatus 10 need not include the deflector 13 and may be configured to cause the irradiator 12 to radially emit an electromagnetic wave in multiple different directions simultaneously to acquire information without scanning. This configuration also provides an effect similar to the effect provided by the above embodiment.

The electromagnetic wave detection apparatus 10 includes the second detector 17, which is a passive sensor, and the first detector 20, which is an active sensor, in the above embodiment. However, a range finder 11 need not be configured in this way. For example, an effect similar to the effect provided by the above embodiment is provided by a configuration in which both the second detector 17 and the first detector 20 are an active sensor or a passive sensor in the range finder 11.

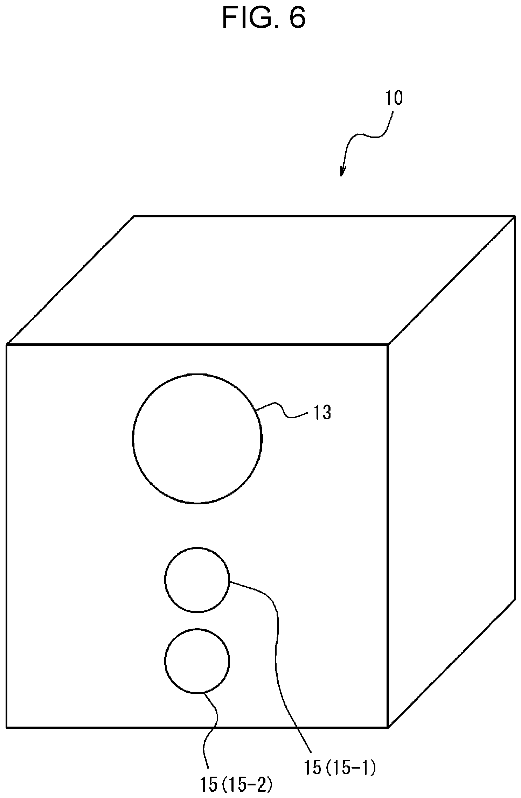

The multiple input units 15 are arranged parallel to the scanning direction, that is, in the horizontal direction in the electromagnetic wave detection apparatus 10 according to the above embodiment. The multiple input units 15 may be arranged perpendicular to the scanning direction, that is, in the height direction. In this case, the multiple input units 15 may include two input units 15 having different angles of view. FIG. 6 illustrates another example of an appearance of the electromagnetic wave detection apparatus 10 with N equal to 2, that is, the electromagnetic wave detection apparatus 10 including two optical receiver systems 110. In the example in FIG. 6, the first input unit 15-1 and the second input unit 15-2 are arranged perpendicular to the scanning direction. Such a configuration improves the receiving sensitivity when the first input unit 15-1 and the second input unit 15-2 have different angles of view and the irradiator 12 includes electromagnetic wave emission elements arranged in the height direction in an array in the irradiation system 111 to form the first electromagnetic wave in a shape elongated in the height direction.

The first input unit 15-1 may include a lens having a narrower angle of view than a lens included in the second input unit 15-2. Such a configuration enables the first input unit 15-1 to perform detection of a distant object and enables the second input unit 15-2 to perform detection in a wide angle of view. The first input unit 15-1 and the second input unit 15-2 may be disposed with inclination in opposite directions. For example, the first input unit 15-1 may be disposed in such a manner that the optical axis is inclined in the right direction, and the second input unit 15-2 may be disposed in such a manner that the optical axis is inclined in the left direction. Such a configuration enables the electromagnetic wave detection apparatus 10 to acquire information with regard to the surroundings in a wider angle of view.

The separator 16, the switch 18, the first detector 20, and the second detector 17 are disposed for each of the multiple input units 15 in the electromagnetic wave detection apparatus 10 in the above embodiment. The multiple input units 15 may share one or more of the separator 16, the switch 18, the first detector 20, and the second detector 17 in the electromagnetic wave detection apparatus 10. Since the multiple input units 15 share one or more functional blocks, the electromagnetic wave detection apparatus 10 can be downsized. For example, an optical system disposed to guide an electromagnetic wave incident on the multiple input units 15 to a single switch 18 can downsize the electromagnetic wave detection apparatus 10 in some cases. For example, if the multiple input units 15 share the first detector 20, a reflected wave incident on the multiple input units 15 is synthesized when the reflected wave is incident on the first detector 20. Thus, the synthesis can increase sensitivity of detection by the first detector 20 in the same and/or similar manner as/to the synthesizing process by the controller 14 described above.

When the first electromagnetic wave in one beam outputted from the deflector 13 is reflected by the object ob and the reflected wave is incident on two or more of the multiple input units 15, the first detectors 20 all detect the reflected wave that passes through the two or more of the multiple input units 15 in the above embodiment. Then, the controller 14 performs the process of synthesizing detection information to increase the sensitivity. When the first electromagnetic wave in one beam outputted from the deflector 13 is reflected by the object ob and the reflected wave is incident on two or more of the multiple input units 15, only one of the first detectors 20 may detect the reflected wave. In other words, detection information may be transmitted to the controller 14 from the first detector 20 in one optical receiver system 110 selected from the multiple optical receiver systems 110 on which the reflected wave is incident. Since the controller 14 does not perform the process of synthesizing detection information, a processing load on the controller 14 can be reduced. Alternatively, the controller 14 may control a switch 18 of the multiple switches 18 on which the reflected wave is incident in such a manner that only the switching elements se of the switch 18 guide the reflected wave to the first detector 20.

A region in the overlapping fields of view of the lenses included in the input units 15 may be located within a predetermined distance. Since the irradiator 12 is configured to emit the first electromagnetic wave in pulses in the electromagnetic wave detection apparatus 10, the controller 14 is configured to process a reflected wave of the emitted first electromagnetic wave when the first detector 20 detects the reflected wave within a fixed period before the next pulse of the outgoing electromagnetic wave is emitted. In short, the first detector 20 can detect a reflected wave from an object ob located within the predetermined distance. In contrast, when the emitted first electromagnetic wave is reflected by an object ob located at a distance greater than the predetermined distance, the reflected wave cannot reach the first detector 20 within the fixed period. Thus, the first detector 20 does not detect such a reflected wave. Alternatively, the controller 14 may be configured not to perform a process such as range finding on the detected signal. When the electromagnetic wave detection apparatus 10 is used in the range finder 11 described below, the fixed period is determined based on a range in which the range finder 11 can measure the distance to an object ob.

### (Range Finder)

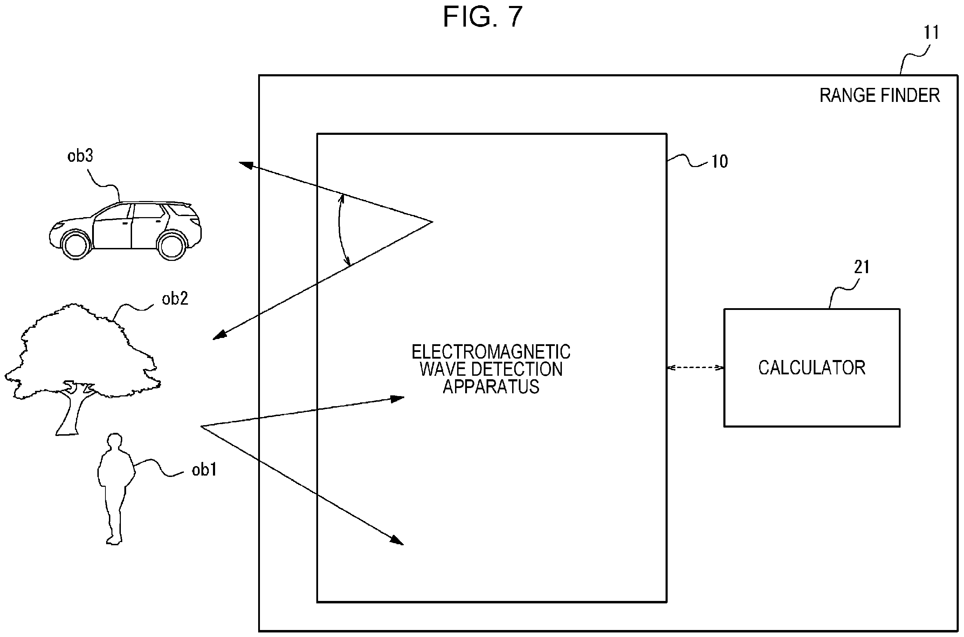

As illustrated in FIG. 7, the range finder 11 includes the electromagnetic wave detection apparatus 10 according to the above embodiment or a variation and a calculator 21. In the range finder 11, the calculator 21 is configured to calculate a distance to a target subject based on detection information from the electromagnetic wave detection apparatus 10. For example, the calculator 21 is configured to acquire detection information from the controller 14 of the electromagnetic wave detection apparatus 10.

The calculator 21 is able to calculate a distance to a measurement target by using the time-of-flight (ToF) method based on acquired detection information as described below.

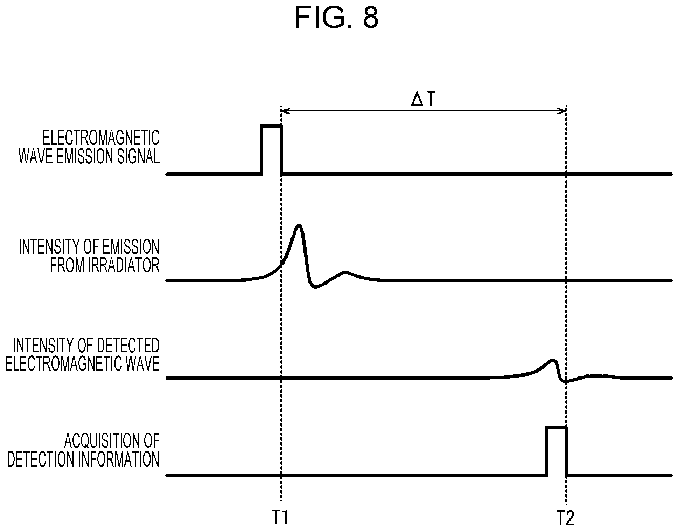

As illustrated in FIG. 8, the controller 14 is configured to cause the irradiator 12 to emit a pulsed electromagnetic wave by inputting an electromagnetic wave emission signal to the irradiator 12 (refer to the "electromagnetic wave emission signal" row). The irradiator 12 is caused to emit an electromagnetic wave based on the inputted electromagnetic wave emission signal (refer to the "intensity of emission from irradiator" row). The electromagnetic wave emitted by the irradiator 12 is reflected and aimed at an irradiation region by the deflector 13 and is reflected back from the irradiation region. The controller 14 is configured to cause at least a group of the switching elements se in a region of image formation to switch to the first state and cause the other switching elements se to switch to the second state. The region of image formation is where an image is formed at the switch 18 by the input unit 15, which focuses the reflected wave from the irradiation region. Namely, the controller 14 is configured to cause each of the multiple switching elements to switch to the first state or the second state in accordance with the output state of the first electromagnetic wave in one beam outputted from the deflector 13. When the first detector 20 detects the electromagnetic wave reflected from the irradiation region (refer to the "intensity of detected electromagnetic wave" row), the first detector 20 sends detection information to the controller 14 as described above.

The calculator 21 is configured to acquire information including the detection information from the controller 14 with regard to the above signal. Examples of the calculator 21 include a time measurement large scale integrated circuit (LSI), and the calculator 21 is configured to measure a time period ΔT from a time T1 at which the irradiator 12 is caused to emit an electromagnetic wave to a time T2 at which detection information is acquired (refer to the "acquisition of detection information" row). The calculator 21 is configured to calculate the time period ΔT multiplied by the speed of light and divided by two to obtain the distance to the irradiation position.

The range finder 11 is configured to create distance information by using direct ToF by directly measuring the time period between emission of laser light and reception of reflected light as described above in the present embodiment. However, the range finder 11 need not be configured in this way. For example, the range finder 11 may create distance information by using flash ToF based on a phase difference between an electromagnetic wave emitted at regular intervals and a returned electromagnetic wave, thereby indirectly measuring the time period until return of the electromagnetic wave. The range finder 11 may also create distance information by using other ToF methods, such as phased ToF.

In another example, the controller 14 may include the calculator 21. That is, the controller 14 may perform the above calculation. In such a case, the range finder 11 can be realized by a configuration that is the same as the configuration of the electromagnetic wave detection apparatus 10 illustrated, for example, in FIG. 1.

Typical examples have been described in the above embodiment, and the feasibility of many changes and substitutions within the spirit and scope of the present disclosure is apparent to those skilled in the art. Accordingly, it is to be noted that the present disclosure is not limited to the above embodiment, and various variations and changes are feasible within the scope of the claims. For example, multiple configuration blocks described in the configuration diagrams in the embodiment can be combined into one, or one configuration block can be divided.

The solutions have been described as the apparatuses in the present disclosure, but the present disclosure can also be realized in a mode including those apparatuses. The present disclosure can also be realized in various modes such as a method, a program, and a recording medium storing a program, which are substantially equivalent to those apparatuses. It is to be noted that the scope of the present disclosure includes such various modes.

### REFERENCE SIGNS

- 10: electromagnetic wave detection apparatus
- 11: range finder
- 12: irradiator
- 13: deflector
- 14: controller
- 15: input unit
- 16: separator
- 17: second detector
- 18, 181: switch
- 19: first post-stage optical system
- 20: first detector
- 21: calculator
- 110: optical receiver system
- 111: irradiation system as action surface
- d1, d2, d3, d4: first direction, second direction, third direction, fourth direction
- ob, ob1, ob2, ob3: object

## Claims

1. An electromagnetic wave detection apparatus comprising:
an irradiator configured to emit a first electromagnetic wave;
a deflector configured to output the first electromagnetic wave in a plurality of different directions, the first electromagnetic wave being emitted by the irradiator;
a plurality of input units on which a second electromagnetic wave is incident, the second electromagnetic wave containing a reflected wave from an object that reflects the first electromagnetic wave outputted from the deflector; and
a first detector configured to detect the reflected wave incident on the plurality of input units,
wherein the reflected wave is incident on at least one of the plurality of input units.

2. The electromagnetic wave detection apparatus according to claim 1,
wherein the plurality of input units has overlapping fields of view, and
the first detector is configured to detect the reflected wave from a region located in an overlying portion of the overlapping fields of view.

3. The electromagnetic wave detection apparatus according to claim 2,
wherein adjacent input units of the plurality of input units each include a lens and have overlapping fields of view and an overlying portion of the overlapping fields of view corresponds to a periphery of the lens.

4. The electromagnetic wave detection apparatus according to claim 2 or 3,
wherein the region located in the overlying portion of the overlapping fields of view is located in a range in which the reflected wave is detected by the first detector.

5. The electromagnetic wave detection apparatus according to any one of claims 2 to 4,
wherein when the reflected wave is incident on two or more of the plurality of input units, the first detector detects
the reflected wave incident on at least one of the two or more of the plurality of input units, the reflected wave being incident on the two or more of the plurality of input units.

6. The electromagnetic wave detection apparatus according to any one of claims 1 to 5, further comprising:
a separator configured to separate the second electromagnetic wave into an electromagnetic wave that propagates in a first direction and an electromagnetic wave that propagates in a second direction;
a switch including a plurality of switching elements switching between a first state and a second state, the first state being a state in which the electromagnetic wave that propagates in the second direction is caused to propagate in a third direction, the second state being a state in which the electromagnetic wave that propagates in the second direction is caused to propagate in a fourth direction;
a second detector configured to detect the electromagnetic wave that propagates in the first direction; and
a controller configured to cause each of the plurality of switching elements to switch to the first state or the second state in accordance with an output direction or an irradiation position of the first electromagnetic wave in one beam outputted from the deflector,
wherein the switch is configured to cause a switching element on which an image of the reflected wave is formed to switch to the first state, the switching element being one of the plurality of switching elements,
the separator is configured to cause the reflected wave to propagate in the second direction, and
the first detector is disposed at a position where the electromagnetic wave that propagates in the third direction is detected.

7. The electromagnetic wave detection apparatus according to claim 6,
wherein the first detector is disposed for each of the plurality of input units, and
the controller is configured to total signals outputted from the plurality of first detectors having detected the reflected wave.

8. The electromagnetic wave detection apparatus according to claim 6 or 7, wherein the separator, the switch, the first detector, and the second detector are disposed for each of the plurality of input units.

9. The electromagnetic wave detection apparatus according to claim 6 or 7, wherein the plurality of input units shares one or more of the separator, the switch, the first detector, and the second detector.

10. The electromagnetic wave detection apparatus according to any one of claims 1 to 9,
wherein the first detector is disposed for each of the plurality of input units, and
a totaling means is included, the totaling means being configured to total signals outputted from the plurality of first detectors having detected the reflected wave.

11. The electromagnetic wave detection apparatus according to claim 2 or 3, wherein when the reflected wave is incident on the plurality of input units, the first detector detects the reflected wave passing through only one of the plurality of input units on which the reflected wave is incident.

12. The electromagnetic wave detection apparatus according to any one of claims 1 to 11,
wherein the plurality of input units is disposed parallel to or perpendicular to a scanning direction in which the deflector is configured to sweep the first electromagnetic wave.

13. An electromagnetic wave detection apparatus comprising:
an irradiation system configured to output a first electromagnetic wave in a plurality of different directions into a space in which an object is present; and
a plurality of optical receiver systems on which a second electromagnetic wave is incident from the space, the second electromagnetic wave containing a reflected wave from the object that reflects the first electromagnetic wave,
wherein each of the plurality of optical receiver systems includes a first detector disposed to detect a portion of the incident second electromagnetic wave, the portion at least containing the reflected wave, and
detection signals of the reflected wave are totaled, the reflected wave being incident on the plurality of optical receiver systems, the detection signals being received from the first detectors.

14. An electromagnetic wave detection apparatus comprising:
an irradiator configured to simultaneously emit a first electromagnetic wave in a plurality of different directions;
a plurality of input units on which a second electromagnetic wave is incident, the second electromagnetic wave containing a reflected wave from an object that reflects the first electromagnetic wave outputted from the irradiator; and
a first detector configured to detect the reflected wave incident on the plurality of input units,
wherein the reflected wave is incident on at least one of the plurality of input units.

15. A range finder comprising:
an irradiator configured to emit a first electromagnetic wave;
a deflector configured to output the first electromagnetic wave in a plurality of different directions, the first electromagnetic wave being emitted by the irradiator;
a plurality of input units on which a second electromagnetic wave is incident, the second electromagnetic wave containing a reflected wave from an object that reflects the first electromagnetic wave outputted from the deflector;
a first detector configured to detect the reflected wave incident on the plurality of input units; and
a calculator configured to calculate a distance to the object based on detection information from the first detector,
wherein the reflected wave is incident on at least one of the plurality of input units.
